# EUROPEAN PATENT APPLICATION

(11) **EP 4 796 812 A1**
(43) Date of publication of application: **26.08.2026**
(21) Application number: 24911842.3
(22) Date of filing: 15.08.2024
(51) Int. Cl.: F16H 57/021, B60L 15/00, H02K 7/116

(54) **VEHICLE DRIVE DEVICE**

(30) Priority: 26.12.2023 JP 2023219091
(71) Applicant: AISIN CORPORATION, Kariya-shi, Aichi 448-8650 (JP)
(72) Inventor: TAKAHASHI Ryota, Kariya-shi, Aichi 448-8650 (JP); OKOCHI Keita, Kariya-shi, Aichi 448-8650 (JP); KOSHIDA Takafumi, Kariya-shi, Aichi 448-8650 (JP)
(74) Representative: Kramer Barske Schmidtchen Patentanwälte PartG mbB
(86) International application number: PCT/JP2024/029056
(87) International publication number: WO 2025/141947

(57) **Abstract**

A vehicle drive device (100) includes a rotating electrical machine (1), an input shaft (2), a pair of output members (3), a reduction mechanism (4), a differential gear mechanism (5), and a case (9). The reduction mechanism (4) reduces the rotational speed of the rotating electrical machine (1). The input shaft (2) is connected so as to rotate integrally with the rotating electrical machine (1). The differential gear mechanism (5) includes a differential input member (51) and distributes, to the pair of output members (3), rotation transmitted from the reduction mechanism (4). The differential input member (51) is rotatably supported relative to the case (9) via a first bearing (B31). The input shaft (2) is rotatably supported relative to the differential input member (51) via a second bearing (B12). The first bearing (B31) is disposed so as to overlap the second bearing (B12) as viewed in a radial direction (R).

## Description

### TECHNICAL FIELD

The present invention relates to a vehicle drive device including: a rotating electrical machine including a rotor; and a reduction mechanism that reduces the rotational speed of the rotor.

### BACKGROUND ART

An example of such a vehicle drive device is disclosed in Patent Document 1 below. In the following description of the background art, the signs and names used in Patent Document 1 are shown in parentheses.

The vehicle drive device (rear transaxle 10) described in Patent Document 1 includes a rotating electrical machine (electric motor 1), a reduction mechanism (first reduction gear pair 14, second reduction gear pair 16), a differential gear mechanism (differential mechanism 17), a case (20) accommodating these components, and a pair of output members (a pair of rear axles 18). In this vehicle drive device (rear transaxle 10), the rotating electrical machine (electric motor 1) and the differential gear mechanism (differential mechanism 17) are arranged on the same axis, and a counter gear mechanism constituting the reduction mechanism (first reduction gear pair 14, second reduction gear pair 16) is arranged on an axis different from that of the rotating electrical machine (electric motor 1) and the differential gear mechanism (differential mechanism 17). The rotational speed of a rotor (11a) of the rotating electrical machine (electric motor 1) is reduced by the reduction mechanism (first reduction gear pair 14, second reduction gear pair 16) and is transmitted to the pair of output members (pair of rear axles 18) through the differential gear mechanism (differential mechanism 17).

In the vehicle drive device (rear transaxle 10) described in Patent Document 1, the rotor (11a) of the rotating electrical machine (electric motor 1) is rotatably supported on the case (20) via an input shaft (output shaft 12) that rotates integrally with the rotor (11a) and a pair of bearings (output shaft bearings 21). The differential gear mechanism (differential mechanism 17) is rotatably supported on the case (20) via a pair of bearings (27).

### Related Art Documents

### Patent Documents

Patent Document 1: Japanese Unexamined Patent Application Publication No. 2014-025491 (JP 2014-025491 A)

### SUMMARY OF THE INVENTION

### Problem to be Solved by the Invention

In the vehicle drive device (rear transaxle 10) described in Patent Document 1, since the rotating electrical machine (electric motor 1) and the differential gear mechanism (differential mechanism 17) are arranged on the same axis, the bearings (output shaft bearings 21) supporting the rotor (11a) and the bearings (17) supporting the differential gear mechanism (differential mechanism 17) are arranged on the same axis side by side in the axial direction. Accordingly, since axial space is needed for arranging these bearings (output shaft bearings 21, bearings 17), the axial dimension of the vehicle drive device (rear transaxle 10) tends to increase.

Therefore, it is desirable to provide a vehicle drive device whose axial dimension can be readily reduced.

### Means for Solving the Problem

In view of the above, a characteristic configuration of a vehicle drive device is as follows. The vehicle drive device includes: a rotating electrical machine including a rotor; an input shaft connected so as to rotate integrally with the rotor; a pair of output members each drivingly connected to a corresponding wheel; a reduction mechanism configured to reduce the rotational speed of the input shaft; a differential gear mechanism including a differential input member and configured to distribute, to the pair of output members, rotation transmitted from the reduction mechanism to the differential input member; and a case that houses the rotating electrical machine, the input shaft, the reduction mechanism, and the differential gear mechanism. The rotor, the input shaft, the pair of output members, and the differential gear mechanism are arranged on a first axis. The reduction mechanism includes: a first gear arranged on the first axis and connected so as to rotate integrally with the input shaft; a counter gear mechanism including a second gear meshing with the first gear and a third gear connected so as to rotate integrally with the second gear, the counter gear mechanism being arranged on a second axis different from the first axis; and a fourth gear arranged on the first axis, meshing with the third gear, and connected so as to rotate integrally with the differential input member. The differential input member is rotatably supported relative to the case via a first bearing. The input shaft is rotatably supported relative to the differential input member via a second bearing. A direction orthogonal to the first axis is defined as a radial direction. The first bearing and the second bearing are arranged so as to overlap each other as viewed in the radial direction.

In this characteristic configuration, the differential input member of the differential gear mechanism is supported by the case via the first bearing, and the input shaft is supported by the differential input member via the second bearing. Thus, the first bearing and the second bearing can be arranged so as to overlap each other as viewed in the radial direction while suppressing an increase in complexity of the shape of the case. Since the first bearing and the second bearing are arranged so as to overlap each other as viewed in the radial direction, the axial dimension of the vehicle drive device can be more easily reduced compared with a configuration in which the first bearing and the second bearing are arranged so as not to overlap each other as viewed in the radial direction.

### BRIEF DESCRIPTION OF THE DRAWINGS

[FIG. 1] FIG. 1 is a sectional view of a vehicle drive device according to an embodiment.
[FIG. 2] FIG. 2 is a skeleton diagram of the vehicle drive device according to the embodiment.
[FIG. 3] FIG. 3 is an enlarged view of a reduction mechanism and a differential gear mechanism shown in FIG. 1.

### MODES FOR CARRYING OUT THE INVENTION

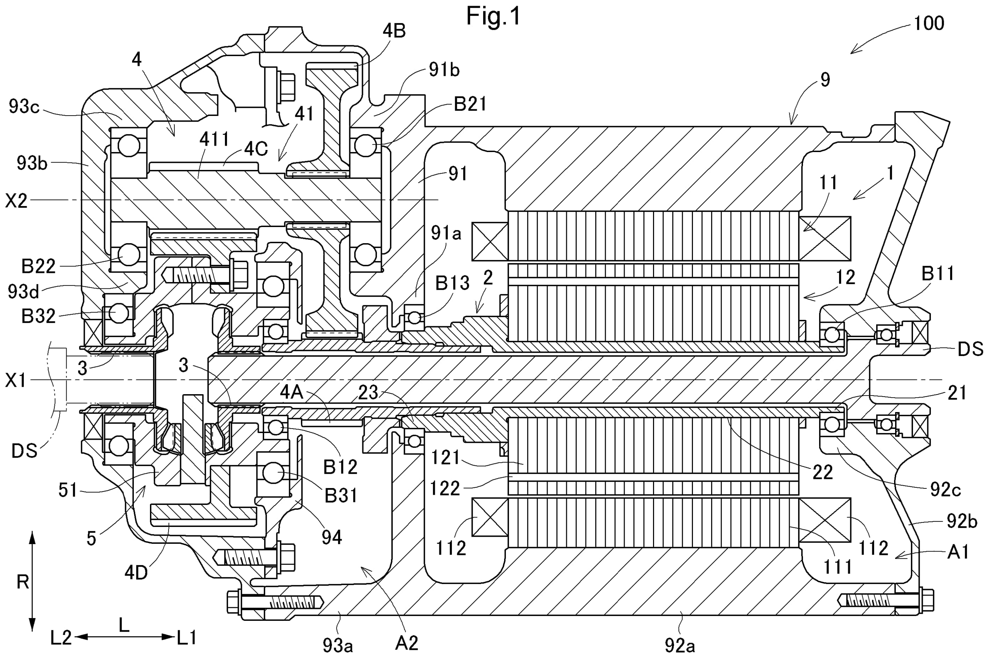

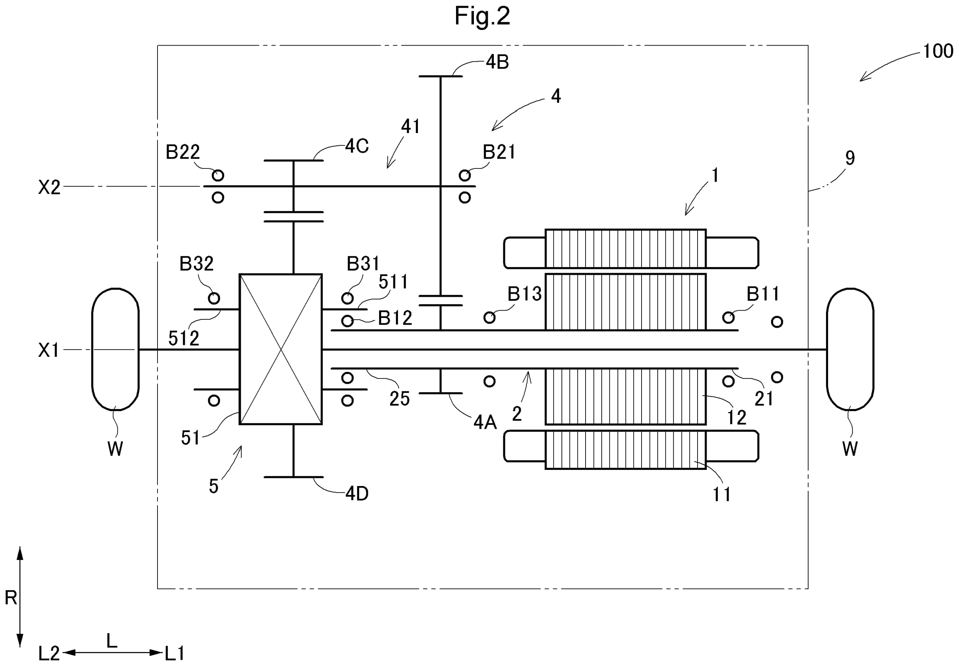

A vehicle drive device 100 according to an embodiment will be described with reference to FIGS. 1 to 3. As shown in FIGS. 1 and 2, the vehicle drive device 100 includes: a rotating electrical machine 1 including a rotor 12; an input shaft 2 connected to the rotor 12 so as to rotate integrally with the rotor 12; a pair of output members 3 each drivingly connected to a corresponding wheel W, a reduction mechanism 4, a differential gear mechanism 5, and a case 9. The reduction mechanism 4 and the differential gear mechanism 5 drivingly connect the input shaft 2 and the output members 3. The case 9 accommodates the rotating electrical machine 1, the input shaft 2, the reduction mechanism 4, and the differential gear mechanism 5. In the present embodiment, the rotor 12 of the rotating electrical machine 1, the input shaft 2, the pair of output members 3, and the differential gear mechanism 5 are arranged on the same axis (first axis X1).

In the present application, "drivingly connected" refers to a state in which two rotating elements are connected such that driving force can be transmitted therebetween, and includes a state in which the two rotating elements are connected so as to rotate integrally with each other, or a state in which the two rotating elements are connected such that driving force can be transmitted therebetween via one or more transmission members. Such transmission members include various members that transmit rotation at the same speed or at a different speed, such as shafts, gear mechanisms, belts, and chains. The transmission members may also include engagement devices that selectively transmit rotation and driving force, such as friction engagement devices and meshing engagement devices.

In the following description, the direction along the first axis X1 is referred to as the "axial direction L" of the vehicle drive device 100. A direction orthogonal to the first axis X1 is referred to as the "radial direction R." One side in the axial direction L is referred to as the first axial side L1. The other side in the axial direction L is referred to as the second axial side L2.

The rotating electrical machine 1 functions as a driving power source for the wheels W. The rotating electrical machine 1 functions as a motor (electric motor) that generates power when supplied with electric power and as a generator (electric power generator) that generates electric power when supplied with mechanical power. Specifically, the rotating electrical machine 1 is electrically connected to an energy storage device (not shown) such as a battery or a capacitor. The rotating electrical machine 1 operates as a motor using electric power stored in the energy storage device to generate driving force. The rotating electrical machine 1 generates electric power using driving force transmitted from the wheels W to charge the energy storage device.

The rotating electrical machine 1 further includes a stator 11. The stator 11 includes a cylindrical stator core 111. The stator core 111 is fixed to a non-rotating member. In the present embodiment, the stator core 111 is fixed to the case 9 that is the non-rotating member. The rotor 12 of the rotating electrical machine 1 includes a cylindrical rotor core 121. The rotor core 121 is rotatably supported relative to the stator core 111.

The reduction mechanism 4 reduces the rotational speed of the input shaft 2. The reduction mechanism 4 includes a first gear 4A connected so as to rotate integrally with the input shaft 2, a counter gear mechanism 41 including a second gear 4B and a third gear 4C, and a fourth gear 4D. The first gear 4A is arranged on the first axis X1. The counter gear mechanism 41 is drivingly connected to the first gear 4A via the second gear 4B. The counter gear mechanism 41 is arranged on a second axis X2 different from the first axis X1. In this example, the first axis X1 and the second axis X2 are parallel to each other. In the present embodiment, the fourth gear 4D is drivingly connected to a differential input member 51. The fourth gear 4D shown in FIG. 1 is arranged on the first axis X1.

In the present embodiment, as shown in FIGS. 1 and 2, the first gear 4A is connected to the rotor 12 by the input shaft 2. The input shaft 2 includes a shaft member connected so as to rotate integrally with the rotor 12. A connection structure between the input shaft 2 and the rotor 12 in the present embodiment will be described later.

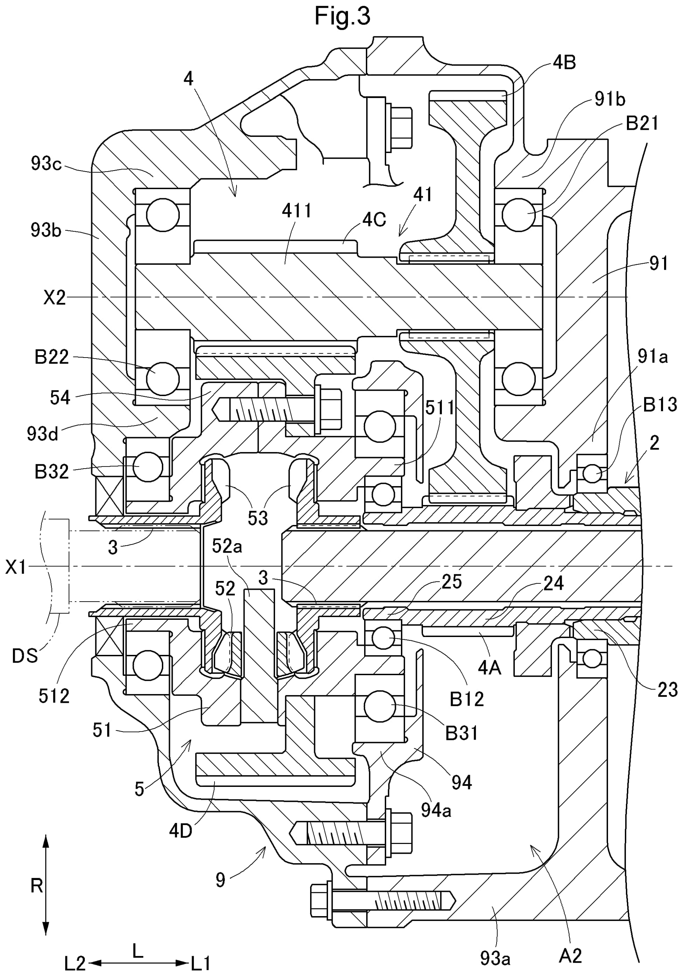

The counter gear mechanism 41 includes the second gear 4B and the third gear 4C. The second gear 4B meshes with the first gear 4A. The third gear 4C is connected so as to rotate integrally with the second gear 4B. In the present embodiment, the third gear 4C is connected to the second gear 4B via a counter shaft 411. The counter shaft 411 includes a shaft member connected so as to rotate integrally with the second gear 4B and the third gear 4C. In the example shown in FIGS. 1 and 3, the counter shaft 411 is formed so as to extend along the second axis X2. At least one of the second gear 4B or the third gear 4C is a separate member from the counter shaft 411 and is connected to the counter shaft 411 so as to rotate integrally with the counter shaft 411. The other one of the second gear 4B or the third gear 4C is formed integrally with the counter shaft 411. In this example, the second gear 4B is a separate member from the counter shaft 411, and the third gear 4C is formed integrally with the counter shaft 411.

As used herein, the term "separate member" refers to members that are separate from each other in a component state before becoming a final product, and includes both members that are separable in the final product state and members that are joined so as to be inseparable in the final product state. The term "separate member" also includes both a case where a plurality of members constituting the "separate member" is made of the same material and a case where the plurality of members is made of different materials.

In the example shown in FIG. 1, the second gear 4B is formed to have a larger diameter than the first gear 4A. Although not shown in the figures, the number of teeth of the second gear 4B is greater than the number of teeth of the first gear 4A. Therefore, when rotation of the first gear 4A is transmitted to the second gear 4B, the rotational speed of the counter shaft 411 becomes lower than the rotational speed of the first gear 4A.

The fourth gear 4D meshes with the third gear 4C. In the example shown in FIG. 1, the fourth gear 4D is formed to have a larger diameter than the third gear 4C. Although not shown in the figures, the number of teeth of the fourth gear 4D is greater than the number of teeth of the third gear 4C. Further, in the example shown in FIG. 1, the third gear 4C is formed to have a smaller diameter than the second gear 4B. Therefore, the fourth gear 4D (described later) that meshes with the third gear 4C can also be positioned to overlap the second gear 4B as viewed in the axial direction L. Accordingly, the fourth gear 4D can readily be formed to have a large diameter without increasing the dimension of the vehicle drive device 100 in the radial direction R.

As shown in FIG. 1, the differential gear mechanism 5 includes the differential input member 51. The differential gear mechanism 5 distributes, to the pair of output members 3, rotation transmitted from the reduction mechanism 4 to the differential input member 51. In the present embodiment, the fourth gear 4D is connected so as to rotate integrally with the differential input member 51.

In the present embodiment, the rotor 12, the first gear 4A, the pair of output members 3, and the differential gear mechanism 5 are arranged on the first axis X1 in the stated order from the first axial side L1 toward the second axial side L2. The arrangement region of the differential gear mechanism 5 in the radial direction R overlaps the arrangement region of the second gear 4B in the radial direction R. Therefore, compared with a case where the arrangement region of the differential gear mechanism 5 in the radial direction R does not overlap the arrangement region of the second gear 4B in the radial direction R, the overall dimension of the vehicle drive device 100 in the radial direction R is reduced.

Regarding arrangement of two elements, "overlap as viewed in a specific direction" means that, when an imaginary straight line parallel to the viewing direction is moved in directions orthogonal to the imaginary straight line, there exists at least a region where the imaginary straight line intersects both elements.

In the present embodiment, as shown in FIG. 3, the differential gear mechanism 5 further includes a pair of pinion gears 52 and a pair of side gears 53. Both the pair of pinion gears 52 and the pair of side gears 53 are bevel gears.

The differential input member 51 of the present embodiment is a hollow member accommodating the pair of pinion gears 52 and the pair of side gears 53. The differential input member 51 is connected so as to rotate integrally with the fourth gear 4D.

The pair of pinion gears 52 is arranged to face each other and is spaced apart from each other in the radial direction R with respect to the first axis X1. The pair of pinion gears 52 is attached to a pinion shaft 52a supported so as to rotate integrally with the differential input member 51. Each of the pair of pinion gears 52 is configured to rotate (spin) about the pinion shaft 52a and rotate (revolve) about the first axis X1.

The pair of side gears 53 meshes with the pair of pinion gears 52. The pair of side gears 53 is arranged so as to rotate about the first axis X1 as a rotation axis. The pair of side gears 53 is arranged to face each other across the pinion shaft 52a and is spaced apart from each other in the axial direction L.

As described above, the case 9 accommodates the rotating electrical machine 1, the input shaft 2, the reduction mechanism 4, and the differential gear mechanism 5. In the present embodiment, the case 9 also accommodates the pair of output members 3.

As shown in FIG. 1, in the present embodiment, the case 9 includes therein a first accommodating portion A1 and a second accommodating portion A2. The first accommodating portion A1 includes a space in which the rotating electrical machine 1 is accommodated. The second accommodating portion A2 includes a space in which the reduction mechanism 4 and the differential gear mechanism 5 are accommodated.

In the present embodiment, the case 9 includes a partition wall portion 91, a first peripheral wall portion 92a, a first side wall portion 92b, a second peripheral wall portion 93a, a second side wall portion 93b, and a support wall portion 94.

The partition wall portion 91 is formed so as to separate the first accommodating portion A1 and the second accommodating portion A2. In the present embodiment, the partition wall portion 91 is formed so as to extend in the radial direction R. That is, the partition wall portion 91 separates the first accommodating portion A1 and the second accommodating portion A2 in the axial direction L.

The first peripheral wall portion 92a is formed so as to cover the rotating electrical machine 1 from the outside in the radial direction R. In the example shown in FIG. 1, the stator 11 of the rotating electrical machine 1 is fixed to the first peripheral wall portion 92a. In the present embodiment, the rotating electrical machine 1 is of an inner rotor type. That is, the stator 11 is disposed outward of the rotor 12 in the radial direction R. Therefore, the stator core 111 is disposed outward of the rotor core 121 in the radial direction R.

In the present embodiment, the rotating electrical machine 1 is of a rotating field type. Therefore, a stator coil is wound around the stator core 111. The stator coil is wound around the stator core 111 such that a pair of coil end portions 112 protruding from the stator core 111 toward the first axial side L1 and the second axial side L2 is formed. A permanent magnet 122 is provided in the rotor core 121.

The first side wall portion 92b is formed so as to cover the first axial side L1 of the rotating electrical machine 1. In the present embodiment, the first peripheral wall portion 92a is formed in a tubular shape that is open on the first axial side L1. The opening of the first peripheral wall portion 92a on the first axial side L1 is closed by the first side wall portion 92b. On the other hand, the partition wall portion 91 is integrally provided at a portion of the first peripheral wall portion 92a on the second axial side L2 of the rotating electrical machine 1.

The second peripheral wall portion 93a is formed so as to cover the reduction mechanism 4 and the differential gear mechanism 5 from the outside in the radial direction R. The second side wall portion 93b is formed so as to cover the second axial side L2 of the reduction mechanism 4 and the differential gear mechanism 5. In the present embodiment, the second peripheral wall portion 93a is formed in a tubular shape that is open on the second axial side L2. The opening of the second peripheral wall portion 93a on the second axial side L2 is closed by the second side wall portion 93b. On the other hand, the partition wall portion 91 is integrally provided at a portion of the second peripheral wall portion 93a on the first axial side L1 of the first gear 4A.

In the present embodiment, the first accommodating portion A1 is formed by the partition wall portion 91, the first peripheral wall portion 92a, and the first side wall portion 92b. That is, the space surrounded by the partition wall portion 91, the first peripheral wall portion 92a, and the first side wall portion 92b inside the case 9 is formed as the first accommodating portion A1.

In the present embodiment, the second accommodating portion A2 is formed by the partition wall portion 91, the second peripheral wall portion 93a, and the second side wall portion 93b. That is, the space surrounded by the partition wall portion 91, the second peripheral wall portion 93a, and the second side wall portion 93b inside the case 9 is formed as the second accommodating portion A2.

In the present embodiment, the support wall portion 94 includes a portion supporting the input shaft 2 and the differential gear mechanism 5. The support wall portion 94 is disposed inside the case 9. In the example shown in FIG. 1, the support wall portion 94 is disposed inside the second accommodating portion A2 and extends from the outer side toward the inner side in the radial direction R. The support wall portion 94 shown in FIG. 1 is a separate member from the second side wall portion 93b and is fixed to the second side wall portion 93b. The support wall portion 94 overlaps the arrangement region of either or both of the rotor 12 and the differential gear mechanism 5 as viewed in the axial direction L. As long as the case 9 can support the input shaft 2 and the differential gear mechanism 5, the support wall portion 94 may be integral with the second side wall portion 93b. The support wall portion 94 may be fixed to the second peripheral wall portion 93a or may be integral with the second peripheral wall portion 93a.

In the present embodiment, the input shaft 2 to which the rotor 12 is fixed is accommodated in the first accommodating portion A1 and the second accommodating portion A2 and is rotatably supported by the case 9. The reduction mechanism 4 and the differential gear mechanism 5 are accommodated in the second accommodating portion A2 and are rotatably supported by the case 9. Hereinafter, a support structure for the input shaft 2, the reduction mechanism 4, and the differential gear mechanism 5 will be described.

In the present embodiment, as shown in FIGS. 1 and 3, the input shaft 2 includes a first shaft end portion 21, a rotor fixing portion 22, a bearing fitting portion 23, a first gear connecting portion 24, and a second shaft end portion 25. The second shaft end portion 25 in the present embodiment corresponds to the "second supported portion." The first shaft end portion 21, the rotor fixing portion 22, the bearing fitting portion 23, the first gear connecting portion 24, and the second shaft end portion 25 are arranged in the stated order along the axial direction L from the first axial side L1 toward the second axial side L2.

The first shaft end portion 21 is a portion supported by a first input bearing B11 described later. In the example shown in FIG. 1, the first shaft end portion 21 is formed in a tubular shape having an axis extending along the axial direction L.

The rotor 12 is fixed to the rotor fixing portion 22. The rotor fixing portion 22 is formed in a tubular shape having an axis extending along the axial direction L. In the example shown in FIG. 1, the rotor fixing portion 22 is disposed so as to protrude from the rotor 12 toward each of the first axial side L1 and the second axial side L2.

A third input bearing B13, described later, is fitted on the bearing fitting portion 23. In the example shown in FIG. 1, the bearing fitting portion 23 is formed in a tubular shape having an axis extending along the axial direction L.

The first gear connecting portion 24 includes a portion to which the first gear 4A is connected. The first gear 4A illustrated in FIGS. 1 and 3 is integrally formed on the outer peripheral surface of the first gear connecting portion 24. The first gear connecting portion 24 illustrated in FIGS. 1 and 3 is a separate member from the first shaft end portion 21, the rotor fixing portion 22, and the bearing fitting portion 23, and is formed in a tubular shape having an axis extending along the axial direction L. The first gear connecting portion 24 has a structure fitted in the bearing fitting portion 23 and is engaged with the bearing fitting portion 23 by spline engagement.

The second shaft end portion 25 is a portion supported by a second input bearing B12 described later. In the example shown in FIGS. 1 and 3, the second shaft end portion 25 is a portion protruding from the first gear 4A toward the second axial side L2. Specifically, the second shaft end portion 25 is a member integral with the first gear connecting portion 24 and is formed in a tubular shape having an axis extending along the axial direction L.

As shown in FIG. 1, the rotor 12 and the input shaft 2 are connected to each other with the inner peripheral surface of the rotor 12 being in contact with the outer peripheral surface of the input shaft 2. In the present embodiment, the inner peripheral surface of the rotor 12 is the inner peripheral surface of the rotor core 121. In the present embodiment, the outer peripheral surface of the input shaft 2 is the outer peripheral surface of the rotor fixing portion 22.

As shown in FIGS. 1 and 2, the input shaft 2 is rotatably supported relative to the case 9 at three different positions along the axial direction L by the first input bearing B11, the second input bearing B12, and the third input bearing B13. The second input bearing B12 in the present embodiment corresponds to the "second bearing."

The first input bearing B11 is disposed on the first axial side L1 of the rotor 12. The first input bearing B11 rotatably supports the input shaft 2. In the present embodiment, the first input bearing B11 is disposed so as to support the outer peripheral surface of the first shaft end portion 21 of the input shaft 2 from the outside in the radial direction R. In the example shown in FIG. 1, the first side wall portion 92b of the case 9 includes a first bearing support portion 92c. The first bearing support portion 92c is formed in a tubular shape extending along the axial direction L at a position inward of the first shaft end portion 21 in the radial direction R so as to overlap the first shaft end portion 21 as viewed in the radial direction R. The first input bearing B11 is disposed between the inner peripheral surface of the first bearing support portion 92c and the outer peripheral surface of the first shaft end portion 21.

The second input bearing B12 is disposed on the second axial side L2 of the first gear 4A. The second input bearing B12 is disposed so as to rotatably support the second shaft end portion 25 of the input shaft 2. In the present embodiment, the second input bearing B12 is disposed so as to support the outer peripheral surface of the second shaft end portion 25 from outside in the radial direction R. The second input bearing B12 is supported by the case 9 via a first end portion 511 and a first differential bearing B31, which will be described later.

As shown in FIG. 1, the third input bearing B13 is disposed between the rotor 12 and the first gear 4A in the axial direction L. The third input bearing B13 rotatably supports the input shaft 2. In the present embodiment, the third input bearing B13 is disposed so as to support the bearing fitting portion 23 from the outside in the radial direction R. In this example, the third input bearing B13 is disposed so as to support the outer peripheral surface of the bearing fitting portion 23 from the outside in the radial direction R. In the example shown in FIG. 1, the case 9 includes a third bearing support portion 91a that supports the third input bearing B13 from the outside in the radial direction R. The third input bearing B13 is supported by the third bearing support portion 91a. The third bearing support portion 91a is formed in a tubular shape extending along the axial direction L at a position outward of the bearing fitting portion 23 of the input shaft 2 in the radial direction R so as to overlap the bearing fitting portion 23 as viewed in the radial direction R.

The counter gear mechanism 41 is rotatably supported relative to the case 9 by a first counter bearing B21 and a second counter bearing B22. In the example shown in FIGS. 1 and 3, the first counter bearing B21 and the second counter bearing B22 rotatably support the counter shaft 411. The first counter bearing B21 is disposed on the first axial side L1 of the second gear 4B. The second counter bearing B22 is disposed on the second axial side L2 of the third gear 4C. The second counter bearing B22 in the present embodiment corresponds to the "fourth bearing."

In the present embodiment, the first counter bearing B21 is disposed so as to support, from the outside in the radial direction R, the outer peripheral surface of an end portion of the counter shaft 411 on the first axial side L1. In the example shown in FIGS. 1 and 3, the partition wall portion 91 of the case 9 includes a first counter bearing support portion 91b. The first counter bearing support portion 91b is formed in a tubular shape extending along the axial direction L at a position outward of the end portion of the counter shaft 411 on the first axial side L1 in the radial direction R so as to overlap the end portion of the counter shaft 411 on the first axial side L1 as viewed in the radial direction R. The first counter bearing B21 is disposed between the inner peripheral surface of the first counter bearing support portion 91b and the outer peripheral surface of the end portion of the counter shaft 411 on the first axial side L1.

In the present embodiment, the second counter bearing B22 is disposed so as to support, from the outside in the radial direction R, the outer peripheral surface of an end portion of the counter shaft 411 on the second axial side L2. In the example shown in FIGS. 1 and 3, the case 9 includes a second counter bearing support portion 93c. The second counter bearing support portion 93c is formed in a tubular shape extending along the axial direction L at a position outside the end portion of the counter shaft 411 on the second axial side L2 in the radial direction R so as to overlap the end portion of the counter shaft 411 on the second axial side L2 as viewed in the radial direction R. The second counter bearing B22 is disposed between the inner peripheral surface of an end portion of the second counter bearing support portion 93c on the second axial side L2 and the outer peripheral surface of the counter shaft 411.

In the present embodiment, the differential gear mechanism 5 is rotatably supported relative to the case 9 by the first differential bearing B31 and a second differential bearing B32. The first differential bearing B31 in the present embodiment corresponds to the "first bearing." The second differential bearing B32 in the present embodiment corresponds to the "third bearing." In the example shown in FIG. 3, the differential input member 51 is rotatably supported relative to the case 9 by the first differential bearing B31 and the second differential bearing B32. More specifically, the differential input member 51 is rotatably supported relative to the case 9 via the first differential bearing B31 on the first axial side L1 of the center position of the differential gear mechanism 5 in the axial direction L (differential gear center position). Note that, in the example shown in FIG. 1, the differential gear center position is the position of the axis of the pinion gear 52. The differential input member 51 is also rotatably supported relative to the case 9 via the second differential bearing B32 on the second axial side L2 of the differential gear center.

The first differential bearing B31 is disposed so as to overlap the second input bearing B12 as viewed in the radial direction R. In the example shown in FIG. 1, the second input bearing B12 is included in the arrangement region of the first differential bearing B31 in the axial direction L. Therefore, compared with a case where the first differential bearing B31 and the second input bearing B12 are arranged such that the arrangement region of the first differential bearing B31 in the axial direction L overlaps a part of the arrangement region of the second input bearing B12 in the axial direction L, the dimension of the vehicle drive device 100 shown in FIG. 1 in the axial direction L can be reduced.

In the present embodiment, the first differential bearing B31 is disposed so as to support the first end portion 511 of the differential input member 51 on the first axial side L1 of the differential gear center position. The first end portion 511 in the present embodiment corresponds to the "first supported portion." In the example shown in FIG. 3, the first end portion 511 is a portion of the differential input member 51 that protrudes toward the first axial side L1. In addition, the first end portion 511 shown in FIG. 3 is formed in a tubular shape extending in the axial direction L.

In the present embodiment, the first end portion 511 is rotatably supported by the first differential bearing B31 from the outside in the radial direction R. In the example shown in FIG. 3, the case 9 includes a first differential bearing support portion 94a. The first differential bearing support portion 94a is formed in the support wall portion 94. The first differential bearing support portion 94a is formed in a tubular shape extending along the axial direction L at a position outward of the first end portion 511 in the radial direction R so as to overlap the first end portion 511 as viewed in the radial direction R. The first differential bearing B31 is disposed between the inner peripheral surface of the first differential bearing support portion 94a and the outer peripheral surface of the first end portion 511. Therefore, the second input bearing B12 described above is supported by the first differential bearing support portion 94a via the first end portion 511 and the first differential bearing B31.

In the present embodiment, the second differential bearing B32 is disposed so as to support a second end portion 512 of the differential input member 51 on the second axial side L2 of the differential gear center position. The second end portion 512 in the present embodiment corresponds to the "third supported portion." In the example shown in FIG. 1, the second end portion 512 is a portion of the differential input member 51 that protrudes toward the second axial side L2. In addition, the second end portion 512 is formed in a tubular shape having an axis along the axial direction L. In the example shown in FIGS. 1 and 3, the second side wall portion 93b of the case 9 includes a second differential bearing support portion 93d. The second differential bearing support portion 93d is formed in a tubular shape extending along the axial direction L at a position outside the second end portion 512 in the radial direction R so as to overlap the second end portion 512 as viewed in the radial direction R. The second differential bearing B32 is disposed between the inner peripheral surface of the second differential bearing support portion 93d and the outer peripheral surface of the second end portion 512.

The second differential bearing B32 is disposed so as to overlap the second counter bearing B22 as viewed in the radial direction R. Further, the second counter bearing B22 is disposed so as to overlap, as viewed in the radial direction R, a portion of the differential input member 51 on the first axial side L1 of the second end portion 512. In the example shown in FIGS. 1 and 3, the second differential bearing B32 and the second counter bearing B22 are arranged such that a part of the arrangement region of the second differential bearing B32 in the axial direction L (a portion on the first axial side L1) overlaps a part of the arrangement region of the second counter bearing B22 in the axial direction L (a portion on the second axial side L2).

Preferably, as illustrated in FIGS. 1 and 3, at least a part of the second counter bearing B22 is disposed inward of the fourth gear 4D in the radial direction R. The second counter bearing B22 is disposed so as to overlap, as viewed in the axial direction L, an extending portion 54 of the differential input member 51 that extends in the radial direction R. In the example shown in FIG. 3, the extending portion 54 includes a portion for fixing the fourth gear 4D to the differential input member 51 with a fastening member (a bolt in the example shown in FIG. 3). With this configuration, the second counter bearing B22 can be disposed using a space available on the second axial side L2 of the differential input member 51. Accordingly, the dimension of the vehicle drive device 100 in the radial direction R can be easily reduced. The extending portion 54 may be any portion of the differential input member 51 that extends in the radial direction R, and is not limited to a portion for fixing the fourth gear 4D to the differential input member 51. For example, the extending portion 54 may be a portion of the differential input member 51 that supports the pinion shaft 52a or a wall portion formed around the pinion gear 52 or the side gear 53.

In the present embodiment, each of the pair of output members 3 is connected so as to rotate integrally with a corresponding side gear 53. Each of the pair of output members 3 is also connected so as to rotate integrally with a corresponding drive shaft DS that is drivingly connected to a corresponding wheel W. In the example shown in FIG. 1, each of the pair of output members 3 is formed in a tubular shape having the first axis X1 as its axis. Each of the pair of output members 3 is connected to a corresponding drive shaft DS by spline engagement, with the drive shaft DS disposed inward of the output member 3 in the radial direction R.

### [Other Embodiments]

(1) In the above embodiment, the input shaft 2 has been described in which the first shaft end portion 21, the rotor fixing portion 22, and the bearing fitting portion 23 are separate members from the first gear connecting portion 24 and the second shaft end portion 25. However, the first shaft end portion 21, the rotor fixing portion 22, the bearing fitting portion 23, the first gear connecting portion 24, and the second shaft end portion 25 may be integrally formed. Conversely, the individual components constituting the input shaft 2 may be separable as desired.
(2) In the above embodiment, it has been described that the first gear 4A is formed integrally with the first gear connecting portion 24. However, the first gear 4A and the first gear connecting portion 24 may be separate members. In such a case, connection between the first gear 4A and the first gear connecting portion 24 includes, for example, spline connection, fastening with a fastening member such as a bolt, and joining by welding.
(3) In the above embodiment, the differential gear mechanism 5 of a bevel gear type has been illustrated and described. However, the differential gear mechanism 5 may be of a planetary gear type. The differential gear mechanism 5 may be of a planetary gear type including a double pinion. In this case, the differential input member 51 is a member that rotates integrally with a ring gear. When the differential gear mechanism 5 is of a planetary gear type, the differential gear center position is the center position in the width direction of the pinion.
(4) In the above embodiment, it has been described that the first axis X1 and the second axis X2 are parallel to each other. However, some of the axes may be skewed relative to other axes. For example, the first axis X1 may be skewed relative to the second axis X2.
(5) In the above embodiment, it has been described that the second input bearing B12 is included in the arrangement region of the first differential bearing B31 in the axial direction L. However, when the dimension of the second input bearing B12 in the axial direction L is greater than the dimension of the first differential bearing B31 in the axial direction L, the first differential bearing B31 may be included in the arrangement region of the second input bearing B12 in the axial direction L. In this case as well, as in the case where the dimension of the first differential bearing B31 in the axial direction L is greater than the dimension of the second input bearing B12 in the axial direction L, the dimension of the vehicle drive device 100 shown in FIG. 1 in the axial direction L can be reduced. The first differential bearing B31 and the second input bearing B12 may be arranged such that a part of the arrangement region of the first differential bearing B31 in the axial direction L overlaps a part of the arrangement region of the second input bearing B12 in the axial direction L.
(6) In the above embodiment, it has been described that the second differential bearing B32 and the second counter bearing B22 are arranged such that a part of the arrangement region of the second differential bearing B32 in the axial direction L overlaps a part of the arrangement region of the second counter bearing B22 in the axial direction L. However, the second differential bearing B32 may be included in the arrangement region of the second counter bearing B22 in the axial direction L. Conversely, when the dimension of the second differential bearing B32 in the axial direction L is greater than the dimension of the second counter bearing B22 in the axial direction L, the second counter bearing B22 may be included in the arrangement region of the second differential bearing B32 in the axial direction L.
(7) In the above embodiment, a configuration has been described in which the second counter bearing B22 is disposed so as to overlap, as viewed in the radial direction R, a portion of the differential input member 51 on the first axial side L1 of the second end portion 512 (hereinafter referred to as the "target portion"). However, the second counter bearing B22 may be disposed on the second axial side L2 of the target portion so as not to overlap the target portion as viewed in the radial direction R.
(8) In the above embodiment, a configuration has been described in which the second differential bearing B32 and the second counter bearing B22 are arranged so as to overlap each other as viewed in the radial direction R. However, the second differential bearing B32 and the second counter bearing B22 may be arranged at different positions in the axial direction L such that second differential bearing B32 and the second counter bearing B22 do not overlap each other as viewed in the radial direction R.
(9) The configurations disclosed in the above embodiment may be applied in combination with configurations disclosed in other embodiments as long as no contradiction arises. Regarding other configurations as well, the embodiment disclosed in the present specification are merely illustrative in all respects. Accordingly, various modifications may be made as appropriate without departing from the spirit and scope of the present disclosure.

### [Summary of Embodiment]

A summary of the embodiment of the vehicle drive device (100) described above will be given below.

The vehicle drive device (100) includes: a rotating electrical machine (1) including a rotor (12); an input shaft (2) connected so as to rotate integrally with the rotor (12); a pair of output members (3) each drivingly connected to a corresponding wheel (W); a reduction mechanism (4) configured to reduce a rotational speed of the input shaft (2); a differential gear mechanism (5) including a differential input member (51) and configured to distribute, to the pair of output members (3), rotation transmitted from the reduction mechanism (4) to the differential input member (51); and a case (9) that houses the rotating electrical machine (1), the input shaft (2), the reduction mechanism (4), and the differential gear mechanism (5). In the vehicle drive device (100), the rotor (12), the input shaft (2), the pair of output members (3), and the differential gear mechanism (5) are arranged on a first axis (X1). The reduction mechanism (4) includes: a first gear (4A) arranged on the first axis (X1) and connected so as to rotate integrally with the input shaft (2); a counter gear mechanism (41) including a second gear (4B) meshing with the first gear (4A) and a third gear (4C) connected so as to rotate integrally with the second gear (4B), the counter gear mechanism (41) being arranged on a second axis (X2) different from the first axis (X1); and a fourth gear (4D) arranged on the first axis (X1), meshing with the third gear (4C), and connected so as to rotate integrally with the differential input member (51). The differential input member (51) is rotatably supported relative to the case (9) via a first bearing (B31). The input shaft (2) is rotatably supported relative to the differential input member (51) via a second bearing (B12). A direction orthogonal to the first axis (X1) is defined as a radial direction (R). The first bearing (B31) and the second bearing (B12) are arranged so as to overlap each other as viewed in the radial direction (R).

In this configuration, the differential input member (51) of the differential gear mechanism (5) is supported by the case (9) via the first bearing (B31), and the input shaft (2) is supported by the differential input member (51) via the second bearing (B12). Thus, the first bearing (B31) and the second bearing (B12) can be arranged so as to overlap each other as viewed in the radial direction (R) while suppressing an increase in complexity of the shape of the case (9). Since the first bearing (B31) and the second bearing (B12) are arranged so as to overlap each other as viewed in the radial direction (R), the dimension of the vehicle drive device (100) in the axial direction (L) can be more easily reduced compared with a configuration in which the first bearing (B31) and the second bearing (B12) are arranged so as not to overlap each other as viewed in the radial direction (R).

In the vehicle drive device (100), a direction along the first axis (X1) is defined as an axial direction (L), one side in the axial direction (L) is defined as a first axial side (L1), and the other side in the axial direction (L) is defined as a second axial side (L2). A center position of the differential gear mechanism (5) in the axial direction (L) is defined as a differential gear center position. The rotor (12), the first gear (4A), and the differential gear mechanism (5) are arranged on the first axis (X1) in the stated order from the first axial side (L1) toward the second axial side (L2). The first bearing (B31) is disposed so as to support a first supported portion (511) of the differential input member (51) on the first axial side (L1) of the differential gear center position. The second bearing (B12) is disposed so as to support a second supported portion (25) of the input shaft (2) on the second axial side (L2) of the first gear (4A).

With this configuration, the input shaft (2) and the differential input member (51) can each be appropriately supported, and the first bearing (B31) and the second bearing (B12) for supporting these members can be appropriately arranged using the space surrounded by the first gear (4A), the second gear (4B), and the differential gear mechanism (5).

In the vehicle drive device (100), the differential input member (51) is rotatably supported relative to the case (9) via a third bearing (B32) on the second axial side (L2) of the differential gear center position. The counter gear mechanism is rotatably supported relative to the case (9) via a fourth bearing (B22) on the second axial side (L2) of the third gear (4C). The third bearing (B32) and the fourth bearing (B22) are arranged so as to overlap each other as viewed in the radial direction (R).

With this configuration, since the third bearing (B32) and the fourth bearing (B22) are arranged so as to overlap each other as viewed in the radial direction (R), the dimension of the vehicle drive device (100) in the axial direction (L) can be more easily reduced compared with a configuration in which the third bearing (B32) and the fourth bearing (B22) are arranged so as not to overlap each other as viewed in the radial direction (R).

In the vehicle drive device (100), the third bearing (B32) is disposed so as to support a third supported portion (512) of the differential input member (51) on the second axial side (L2) of the differential gear center position. The fourth bearing (B22) is disposed so as to overlap, as viewed in the radial direction (R), a portion of the differential input member (51) on the first axial side (L1) of the third supported portion (512).

With this configuration, the fourth bearing (B22) is disposed so as to overlap, as viewed in the radial direction (R), both the third bearing (B32) and a portion of the differential input member (51) on the first axial side (L1) of the third supported portion (512). Accordingly, the fourth bearing (B22) can be disposed using a space available outward of the differential gear mechanism (5) in the radial direction (R). Therefore, the vehicle drive device (100) can be more easily reduced in size.

### INDUSTRIAL APPLICABILITY

The technology according to the present disclosure can be used in a vehicle drive device including: a rotating electrical machine including a rotor; and a speed reduction mechanism that reduces the rotational speed of the rotor.

### Description of the Reference Numerals

100: vehicle drive device, 1: rotating electrical machine, 12: rotor, 2: input shaft, 25: second shaft end portion (second supported portion), 3: output member, 4: speed reduction mechanism, 4A: first gear, 41: counter gear mechanism, 4B: second gear, 4C: third gear, 4D: fourth gear, 5: differential gear mechanism, 51: differential input member, 511: first end portion (first supported portion), 512: second end portion (third supported portion), 9: case, B12: second input bearing (second bearing), B22: second counter bearing (fourth bearing), B31: first differential bearing (first bearing), B32: second differential bearing (third bearing), L: axial direction, L1: first axial side, L2: second axial side, R: radial direction, WH: wheel, X1: first axis, X2: second axis

## Claims

1. A vehicle drive device comprising:
a rotating electrical machine including a rotor;
an input shaft connected so as to rotate integrally with the rotor;
a pair of output members each drivingly connected to a corresponding wheel;
a reduction mechanism configured to reduce a rotational speed of the input shaft;
a differential gear mechanism including a differential input member and configured to distribute, to the pair of output members, rotation transmitted from the reduction mechanism to the differential input member; and
a case that houses the rotating electrical machine, the input shaft, the reduction mechanism, and the differential gear mechanism, wherein:
the rotor, the input shaft, the pair of output members, and the differential gear mechanism are arranged on a first axis;
the reduction mechanism includes
a first gear arranged on the first axis and connected so as to rotate integrally with the input shaft,
a counter gear mechanism including a second gear meshing with the first gear and a third gear connected so as to rotate integrally with the second gear, the counter gear mechanism being arranged on a second axis different from the first axis, and
a fourth gear arranged on the first axis, meshing with the third gear, and connected so as to rotate integrally with the differential input member;
the differential input member is rotatably supported relative to the case via a first bearing;
the input shaft is rotatably supported relative to the differential input member via a second bearing;
a direction orthogonal to the first axis is defined as a radial direction; and
the first bearing and the second bearing are arranged so as to overlap each other as viewed in the radial direction.

2. The vehicle drive device according to claim 1, wherein:
a direction along the first axis is defined as an axial direction, one side in the axial direction is defined as a first axial side, the other side in the axial direction is defined as a second axial side, and a center position of the differential gear mechanism in the axial direction is defined as a differential gear center position;
the rotor, the first gear, and the differential gear mechanism are arranged on the first axis in a stated order from the first axial side toward the second axial side;
the first bearing is disposed so as to support a first supported portion of the differential input member on the first axial side of the differential gear center position; and
the second bearing is disposed so as to support a second supported portion of the input shaft on the second axial side of the first gear.

3. The vehicle drive device according to claim 2, wherein:
the differential input member is rotatably supported relative to the case via a third bearing on the second axial side of the differential gear center position;
the counter gear mechanism is rotatably supported relative to the case via a fourth bearing on the second axial side of the third gear; and
the third bearing and the fourth bearing are arranged so as to overlap each other as viewed in the radial direction.

4. The vehicle drive device according to claim 3, wherein:
the third bearing is disposed so as to support a third supported portion of the differential input member on the second axial side of the differential gear center position; and
the fourth bearing is disposed so as to overlap, as viewed in the radial direction, a portion of the differential input member on the first axial side of the third supported portion.
